# EUROPEAN PATENT APPLICATION

(11) **EP 2 676 845 A1**
(43) Date of publication of application: **25.12.2013**
(21) Application number: 13172537.6
(22) Date of filing: 18.06.2013
(51) Int. Cl.: B60R 1/02, B60R 1/06

(54) **A method and system for dynamically adjusting a vehicle mirror**

(30) Priority: 22.06.2012 US 201213530457
(71) Applicant: Bayerische Motoren Werke Aktiengesellschaft, 80809 München (DE)
(72) Inventor: Lutz, Markus, 80636 München (DE); Winckler, Andreas, Mountain View, CA California 94040 (US)

(57) **Abstract**

A method for adjusting a vehicle mirror (10) between a standard mirror angle adjustment to a dynamic mirror angle adjustment. The vehicle receives map data of a surrounding area of a vehicle including a first path of travel (20) and a second path of travel (30). The vehicle also receives vehicle positioning data indicating a vehicle position along one of the first path of travel or the second path of travel. The vehicle then calculates a dynamic mirror angle adjustment (a^{x}) based on the vehicle position and map data of the first path of travel and the second path of travel. The vehicle mirror is adjusted by the dynamic mirror angle adjustment relative to a standard mirror angle adjustment (a¹).

## Description

### FIELD OF THE INVENTION

The invention relates to a mirror for a motor vehicle and, more particularly, to a method and system for dynamically adjusting a mirror for a motor vehicle.

### BACKGROUND

Merging a vehicle onto a highway is difficult and creates a dangerous situation. Motorists must manage objects and vehicle speed - in front, behind, and to the side - while simultaneously increasing speed to enter the highway. This generally requires the vehicle operator to physical strain themselves to maintain prompt attention of adjacent traffic. While all these tasks are demanding of the operator's attention, the car is typically turning. Furthermore, certain objects are outside the peripheral vision of the operator. This causes the operator to turn their head or body to observe and manage adjacent oncoming traffic. Accordingly, external side mirrors are used to help the operator manage objects to the side and outside the operator's peripheral vision.

While most external mirrors are adjustable, the driver performs the adjustment before driving the vehicle. The external mirrors are generally adjusted to a static angle corresponding to a preferred line and angle of sight for the driver in order to view adjacent traffic on either side of the vehicle or outside the driver's peripheral vision. Since the angle of the external mirror is generally static during operation of the vehicle (without manually adjustment by the driver), blind spots are formed, which are especially problematic when merging onto a highway.

It has long been desired to include additional external mirrors that provide a wider viewing angle for the driver to see adjacent traffic in the blind spots outside the driver's peripheral vision, without having the driver adjust their head.

German Application DE102009048816A1 discloses an approach whereby an side mirror of a motor vehicle is adjusted. The method includes automatic adjustment of the external side mirror from a first position to a second position, as a function of a steering wheel and vehicle speed. The external mirror is adjusted, by an angle, when the driver steers the vehicle. The driver of the motor vehicle is then provided a different view of adjacent traffic when making a turn of the wheel.

However, a problem exists with the known technique. Not only is it limited in adjusting the external mirror only when the driver turns the wheel (i.e. vehicle driven along a curved path or a changing of direction), it is imprecise.

### SUMMARY

Therefore, an object of the invention, among others, is to provide a method for automatically adjusting an external mirror of a vehicle in a dynamic fashion at precise moments.

The method provides adjustment of a vehicle mirror between a standard mirror angle adjustment to a dynamic mirror angle adjustment. The vehicle receives map data of a surrounding area of a vehicle including a first path of travel and a second path of travel. The vehicle also receives vehicle positioning data indicating a vehicle position along one of the first path of travel or the second path of travel. The vehicle then calculates a dynamic mirror angle adjustment based on the vehicle position and map data. The vehicle mirror is adjusted by the dynamic mirror angle adjustment relative to a standard mirror angle adjustment.

### BRIEF DESCRIPTION OF THE DRAWINGS

The invention will be explained in greater detail with reference to embodiments, referring to the appended drawings, in which:
Figure 1 is a graphical representation of a mirror system according to an embodiment of the invention;
Figure 2 is a flow diagram of a method of dynamically adjusting the mirror system according to an embodiment of the invention;
Figure 3 is a perspective graphical representation of the mirror system, showing the pivot angles of the mirror; and
Figure 4 is a block diagram of the mirror system according to an embodiment of the invention.

### DETAILED DESCRIPTION OF THE EMBODIMENT(S)

While the invention disclosed herein was developed for a motor vehicle which is driven on the right hand side of a road by an operator in the left front seat, it should be understood that it is equally applicable to those vehicles driven on the left by an operator in the right seat. The invention is illustrated herein for right hand side road driving only, for simplicity of understanding. Primary discussion of the invention herein shall be directed to a method and system for dynamically adjusting a vehicle mirror. For sake of brevity, this disclosure is focused on one external mirror that applies the methods and systems according to the invention, and omits other known components used in a motor vehicle from the detailed description, including use of two or more vehicle mirrors disposed along other places of a motor vehicle. For instance, the methods and systems disclosed below could incorporate operation of other mirrors known to be used by an operator of a vehicle, including the rear view or other side view mirrors.

Additionally, it should be appreciated by one skilled in the art that the disclosed methods and systems could be applicable to other types of vehicles (i.e. boats, airplanes, helicopters, etc.) than that which is shown and could be applicable to any type of vehicle transported by an operator from one path of travel to a second path of travel.

Hereinafter, a disclosure of a method and system for dynamically adjusting a vehicle mirror will be described with reference to the appended figures.

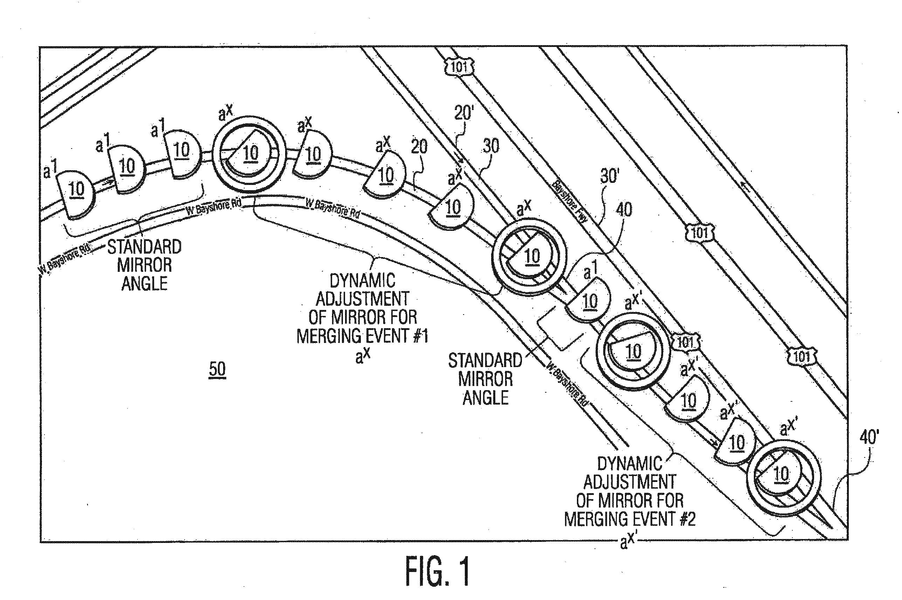

First, with reference to Figure 1, a vehicle mirror 10 is shown, which dynamically adjusts according to a position of the vehicle at a specific moment. While the vehicle itself is not shown, in order to concentrate on the adjustment of the external mirror as a function of vehicle position and other facts, one skilled in the art should appreciate that there are vehicle components that are utilized with the assistance of a dynamic adjustment of the vehicle mirror 10.

As shown in Figure 1, the vehicle mirror 10 adjusts between a standard mirror angle adjustment a¹ (in a static position) to a dynamic mirror angle adjustment a^{x} (one or more dynamic adjustments). The dynamic mirror angle adjustment a^{x} is a position adjustment of the vehicle mirror 10, for example, according to an x-y-z coordinate system, and provides the operator a new viewing angle as the vehicle moves from a first path of travel 20 to a second path of travel 30 (i.e. from an on-ramp to a highway lane). This offers a new view of the second path of travel 30 with respect to the angle of reflection of the standard mirror angle adjustment a¹. The method of adjusting a vehicle mirror 10 is discussed below.

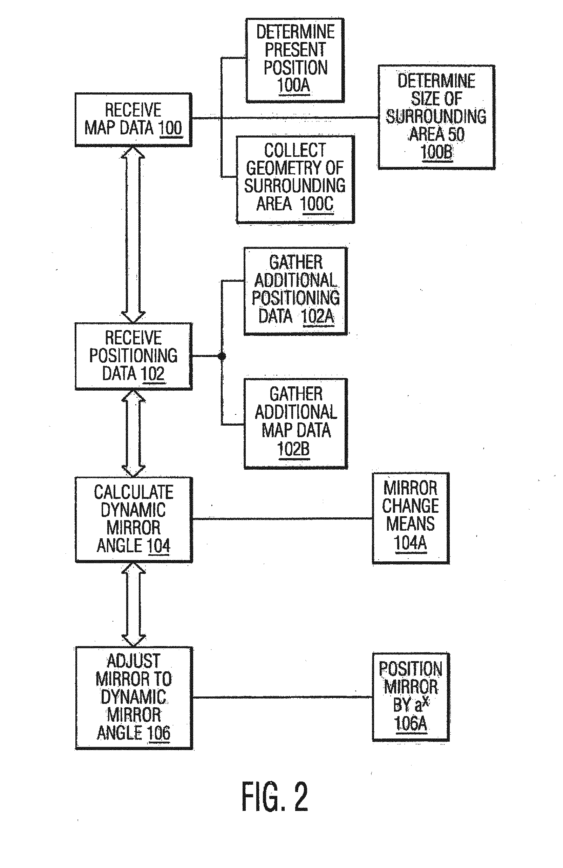

With respect to Figures 1 and 2, the method of adjusting a vehicle mirror 10 according an embodiment of the invention is disclosed, and includes the following steps: (1) receiving map data 100 including the intersection 40 of a first path of travel 20 and a second path of travel 30; (2) receiving vehicle positioning data 102 indicating a vehicle position along one of the first path of travel 20 or the second path of travel 30; (3) calculating a dynamic mirror angle adjustment a^{x} 104 based on the vehicle position and map data of the first path of travel 20 and the second path of travel 30; and (4) adjusting the vehicle mirror to the dynamic mirror angle adjustment a^{x} 106 from a standard mirror angle adjustment.

In order to adjust the vehicle mirror 10 from the standard mirror angle adjustment a¹ to the dynamic mirror angle adjustment a^{x}, the vehicle receives map data 100. First, the vehicle determines the proximate position of the vehicle at a particular moment 100A, which is reference for any further data collected. The vehicle then receives and collects map data 100 of a surrounding area 50 relative to the proximate position of the vehicle at a particular moment which may include the size of the surrounding area 50 (100B) and the geometry of the surrounding area 50 (100C).

In an embodiment, the vehicle starts receiving and collecting map data concerning the surrounding area 50 once the vehicle determines its proximate position. The size of the surrounding area selected is a variable that can be adjusted to efficiently complete the method of adjusting the vehicle mirror. For instance, the surrounding area 50 may be a 300-yard radius from the determined proximate position. The amount of map data collected is determinant on a size of surrounding area 50. Therefore, the size of the surrounding area 50 may be a function of speed, or a static dimension selected by the method.

The map data includes diagrammatic representations of physical features and roadways within the determined surrounding area 50. In an embodiment, the map data is received and then collected into a database. The map data includes the geometry of existing roadways and terrain relative to a present position within the surrounding area 50 of the vehicle.

In the shown embodiment of Figure 1, the first path of travel 20 is a roadway, but may be any defined travel path that the vehicle is presently on. For instance, the first path of travel 20 may be a rest area, adjacent to a highway. It is also possible that the map data includes physical features (i.e. terrain and physical visual obstructions), as well as data regarding adjacent roadways relative to the determined first path of travel 20. For instance, the vehicle may collect map data on physical features and adjacent roadways within a quarter mile of the vehicle, while traveling along the first path of travel 20. The map data will help determine that the second path of travel 30 is an adjacent path with respect to the first path of travel, and that intersects the first path of travel 20. In Figure 1, the second path of travel 30 and an intersection 40 are identified within the surrounding area 50 and proximate to the vehicles present position. While the value of proximity may change depending on the speed of the vehicle, the value of proximity should be large enough that map data concerning the second path of travel 30 is collected in advance, before the vehicle travels from the first path of travel 20 to the second path of travel 30, at an intersection 40. One skilled in the art should appreciate that the map data may be collected through any number of vehicle sensors and modules, which provide information in order to determine if a dynamic mirror angle adjustment a^{x} is required.

As shown in Figure 1, the vehicle is traveling down a first identified path of travel 20 and connects to the second path of travel 30 at a first intersection 40. However, once the vehicle mirror 10 is positioned on the second path of travel 30, the vehicle then identifies this as another first path of the travel 20' which connects to another second path of travel 30' at another intersection 40'.

In one embodiment, the map data includes geometry of the first path of travel 20, including length, elevation, and curvature of the first path of travel 20, as well as other collectable factors, such as speed limit, weather conditions, time of day, and road conditions. Additionally, the map data may include geometry of adjacent roadways, as well as relation information between the first path of travel 20 and the second path of travel 30. If there is more than one proximate and adjacent roadway, then the second path of travel 30 is identified as intersecting the first path of travel which is the first intersection 40, where the first path of travel 20 and the second path of travel 30 convene. However, it is possible that certain conditions are required before the first path of travel 20 and second path of travel 30 are identified before the dynamic mirror angle adjustment a^{x} is performed.

The vehicle is constantly receiving vehicle positioning data 102 in order to determine where the vehicle is, along a path using a vehicle positioning unit. For instance, the vehicle constantly gathers additional positioning data 102A and additional map data 102B through any number of sensors and modules. In one embodiment, the method of adjusting a vehicle mirror 10 is not fully performed until it is established through the map data that the first path of travel 20 and the second path of travel 30 are an interchange and highway respectively. That is, the first path of travel 20 is the interchange leading into the highway, and the second path of travel 30, which is a roadway, convenes with the interchange at the intersection 40. This is one example, and various other conditions could be used to limit the method of adjusting the vehicle mirror 10. The use-case of the dynamic mirror is not only limited to highway interchanges but rather all merging event where the vehicle is at a significant speed difference relative to the traffic in which it wishes to merge and at an angle that it less than 90° (vehicle relative to traffic).

As discussed above, the interchanges may be road junctions that may have grade separation, and/or one or more ramps, to permit traffic on at least one highway to pass through the junction without directly crossing any other traffic stream. However, the junction may be a secondary roadway that leads onto the highway, such as a emergency or rest area, off the side of the second path of travel 30. Thanks to the detailed incoming data, the dynamic mirror system 1 can be sure not to dynamically adjust the vehicle mirror 10 whenever the vehicle is turning but rather only in merging situations when the dynamic mirror system 1 provides an added value.

Both positioning and map data may be collected from a variety of modules (including a vehicle positioning unit, sensors, cameras or even through data exchange modules (i.e. cellular, satellite or other known technologies)). These modules compile information that is received and collected to determine the geometry of the surrounding landscape, as well as other data which would assist one skilled in the art in determining the dynamic mirror angle adjustment a^{x} relative to the standard mirror angle adjustment a¹. For instance, the map data may include roadway grade, elevation difference between the first path of travel 20 and the second path of travel, speed limit, distance (i.e. between the adjacent roadways, between vehicle and intersection 40, etc.), road conditions of the first path of travel 20, as well as distance to second path of travel 30. Practically any data, that can be collected to assist in determining the dynamic mirror angle adjustment a^{x}, will be collected and stored for use in the method of adjusting the vehicle mirror 10.

For instance, the map data may include visual obstructions such as trees or buildings, as well as traffic signs and signals (i.e. stop sign, stop signal, yield, etc.). The map data may include traffic and travel information through coded signals (i.e. digital or analog) using known systems such as, but not limited to, conventional FM radio broadcasts, digital audio broadcast (DAB) or satellite radio. No matter how or where the map data is received, it is then collected and stored for further processing with other real time information, including present status of vehicle position, to determine if and what the dynamic mirror angle adjustment a^{x} should be relative to the standard mirror angle adjustment a¹.

In order to determine when the standard mirror angle adjustment a¹ is adjusted to the dynamic mirror angle adjustment a^{x}, constant positioning of the vehicle is determined by collecting vehicle positioning data. This vehicle positioning data is acquired to indicate a present position of the vehicle either along the first path of travel 20 or the second path of travel 30. The adjustment of the vehicle mirror 10 is a function of the proximate position of the vehicle with respect to the collected map data.

In one embodiment, vehicle positioning data is acquired through a vehicle positioning unit. The vehicle positioning unit determines the proximate position of the vehicle, which may be performed by connecting to one or more vehicle tracking systems. As a result, the vehicle positioning unit can determine the approximate or precise location of the vehicle to which it is attached. That position is then recorded at regular intervals into the vehicle positioning unit or into a memory of a vehicle-processing module, which is either connected to a processor or the vehicle positioning unit.

The vehicle positioning data is used to identify the first path of travel 20 and the second path of travel 30 relative to the map data. The vehicle positioning data provides the position of the vehicle relative to the map data, such as the geometry of the surrounding landscape and roadways, as well as other variables, including but not limited to traffic, visual obstructions, grade and elevation, and roadway restrictions (i.e. stop signs, traffic lights, speed limits, et al.).

Knowledge as to the location of the vehicle is fundamental to the method and system for dynamically adjusting the vehicle mirror 10, considering the dynamic mirror angle adjustment a^{x} is dependent on the position of the vehicle along the first path of travel 20 with respect to the second path of travel 30, and the map collected concerning the two. The dynamic mirror angle adjustment a^{x} is just that - dynamic- with adjustments that change depending on where the vehicle is relative to the second path of travel 30, as well as other factors/variables collected as the map data.

The vehicle positioning unit, as described above, is any type of system that utilizes a communications component to identify the approximate or precise location of a vehicle. In the embodiment shown, the vehicle positioning unit is an on-board component display module (i.e. navigation unit having an electronic map, as is commonly known). For instance, the vehicle positioning unit utilizes a Global Position Systems (GPS) system. However, other known vehicle tracking systems may be used.

The GPS system utilizes satellites to transmit signals that are then sent to and received by the vehicle positioning unit (such as a global positioning receiver). In one embodiment, for instance, the vehicle positioning unit would first locate four or more GPS satellites, and then calculate the distance to each satellite by analyzing information sent in signals sent from the satellites. This analysis, which is relatively known in the art and performed by the vehicle positioning unit, determines the approximate, if not precise, vehicle position in real time.

As an alternative, cellular technology that utilizes radio masts and towers, may be used as well, although not as robust. In fact, mobile positioning, using a handheld device, like a mobile device, is also possible, wherein the approximate position of a mobile device is tracked. Since, the mobile device would be in an approximate position of the vehicle, the vehicle position could also be determined. However, an additional connection between the mobile device and vehicle positioning unit would have to be established, such as Bluetooth or other known wireless technology.

As the vehicle receives or determines vehicle positioning data 102, to indicate a present position of the vehicle, the step of calculating the dynamic mirror angle adjustment a^{x} (104) is performed and based on the present vehicle position as well as the map data, which may include geometry (i.e. length, elevation, and curvature) and other acquired variables, such as speed limit, weather conditions, time of day, and road conditions, of surrounding area 50. In the embodiment shown, the map data would include data regarding the first path of travel 20 and the second path of travel 30, as well as the area between the two. The dynamic mirror angle adjustment a^{x} is also calculated according to the standard mirror angle adjustment a¹, which has been adjusted by the operator according to preferred viewing angles according to their posture and body position, as well as other preferred factors. However, it is also possible that other information is collected regarding to the operator, including body position, posture and vehicle. This information may be collected from the vehicle computer of other sensors and modules, such as eye cameras and software that tracks eye movement and body gestures. Other sensors and modules will be further discussed below, with reference to the dynamic mirror adjustment system.

A main control unit calculates the dynamic mirror angle adjustment a^{x} by processing the map data with the vehicle positioning data to: (1) determine when to adjust the standard mirror angle adjustment a¹ to the dynamic mirror angle adjustment a^{x}, and (2) perform a mirror change means 104A to determine the dynamic mirror angle adjustment a^{x}. In the shown embodiment, the mirror change means is performed through a mirror change algorithm. However, it is possible to use other techniques known to one skilled in the art in determining the dynamic mirror angle adjustment a^{x}.

The mirror change algorithm is performed by the main control unit, through an algorithm and/or calculations, and determines the adjustment angle of a major surface of the vehicle mirror 10 (i.e. according to an x-y-z coordinate system), as the dynamic mirror angle adjustment a^{x}. In general, the mirror change algorithm includes: (1) determining first path of travel 20, (2) determining the second path of travel 30, (3) determining if an adjustment of the standard mirror angle adjustment a¹ is required to provide the dynamic mirror angle adjustment a^{x}, and (4) determining a mirror adjustment that provides an optimal view of the second path of travel (i.e. widest view, intervening adjacent traffic, least restrictive view according to terrain relief and obstructions, etc.). If mirror change algorithm determines that the vehicle operator has limited view of the second path of travel 30 using the standard mirror angle adjustment a¹, then the mirror change algorithm determines that the vehicle mirror 10 requires adjustment from the standard mirror angle adjustment a¹ to the dynamic mirror angle adjustment a^{x} so that the driver of the vehicle can view the second path of travel 30 and objects along the second path of travel 30, when the vehicle transitions from the first path of travel 20 to the second path of travel 30. Since the dynamic mirror angle adjustment a^{x} is determined by proximate position of the vehicle and the vehicle is generally moving along the first path of travel, the actual position of the vehicle mirror 10, reflecting the dynamic mirror angle adjustment a^{x}, adjusts continuously by way of the mirror change algorithm: collecting and receiving map data 100 and vehicle positioning data 102, and then calculating the dynamic mirror angle adjustment a^{x} 104 what position adjustments the major surface of the vehicle mirror 10 are needed to provide the driver with a reflection of the second path of travel 30 that may be outside the driver's view. Therefore, the mirror change algorithm is constantly performing decisions on when to adjust the vehicle mirror 10 to the dynamic mirror angle adjustment a^{x}.

The standard mirror angle adjustment a¹ is an angle of a major surface of the vehicle mirror, either manually or remotely adjusted, according to vertical and horizontal adjustments so as to provide a driver adequate coverage behind and to the side of the vehicle. The standard mirror angle adjustment a¹ is an adjusted angle and position of the major surface of vehicle mirror according to height and seated position preferences of the driver. The standard mirror angle adjustment a¹ can be modified by a mechanical means of cables or by an electric means of geared motors that tilt a major surface of vehicle mirror which reflect the sides of the vehicle as well outside of the driver's peripheral vision. However, if the first path of travel 20 is not directly adjacent and parallel to the second path of travel 30, then the standard mirror angle adjustment a¹ will not reflect the sides of the vehicle as well outside of the driver's peripheral vision to account for oncoming or adjacent traffic. Rather, there is a dynamic mirror angle adjustment a^{x}, where the major surface of the vehicle mirror 10 may have a different viewing angle to view blind spots and areas outside of the driver's peripheral vision. For instance, as the vehicle moves along an interchange, onto a major highway, the driver may not be able to view major highway or objects traveling on the highway. This results when the position of the vehicle mirror at the standard mirror angle adjustment a¹ will not view the highway, but rather, the vehicle mirror 10 requires a dynamic mirror angle adjustment a^{x} in order to provide a different viewing angle for the driver. The dynamic mirror angle adjustment a^{x} provides a proper placement of the major surface of the vehicle mirror such that the driver can view the highway and objects traveling on the highway. In this example, the interchange is the first path of travel 20 and the highway is the second path of travel 30. The mirror change algorithm constantly determines new dynamic mirror angle adjustments a^{x} as the vehicle moves along the first path of travel, until it is decided that the vehicle is then positioned on the second path of travel 30, at which the mirror change algorithm determines to revert the vehicle mirror position back to the standard mirror angle adjustment a¹. Once the vehicle's position or status qualifies the conditions that trigger the mirror change algorithm (i.e. positioned on a known interchange), the vehicle will again loop through the aforementioned methods described above namely: (1) receiving map data 100 including the intersection 40 of a first path of travel 20 and a second path of travel 30; (2) receiving vehicle positioning data 102 indicating a vehicle position along one of the first path of travel 20 or the second path of travel 30; (3) calculating a dynamic mirror angle adjustment a^{x} 104 based on the vehicle position and map data of the first path of travel 20 and the second path of travel 30; and (4) adjusting the vehicle mirror to the dynamic mirror angle adjustment a^{x} 106 from a standard mirror angle adjustment.

In another embodiment, there may be a grade separation between the first path of travel 20 and the second path of travel 30. Additionally, the intersection 40 between the first path of travel 20 and the second path of the travel 30 is not orthogonal, but rather the first path of travel 20 has a curved path, intervening with the second path of travel 30 at an acute angle. For this situation, the standard mirror angle adjustment a¹ will not provide clear vision of the second path of travel 30, as well as objects outside of the driver's peripheral vision to account for oncoming or adjacent traffic, before the vehicle merges onto the second path of travel 30. Therefore, a dynamic mirror angle adjustment a^{x} is required to allow the vehicle mirror 10 to reflect the second path of travel 30, as well as objects outside of the driver's peripheral vision, to account for oncoming or adjacent traffic along the first path of travel 20. In fact, the dynamic mirror angle adjustment a^{x} may be an adjustment that constantly changes depending on map data relative to the vehicle positioning data.

In the embodiment shown, the mirror change algorithm determines the dynamic mirror angle adjustment a^{x} when the vehicle is positioned on a so-called interchange (i.e. on ramp of a highway), as the first path of travel 20, at a set distance X from the second path of travel 30. The mirror change algorithm includes two conditions: (1) the vehicle must be positioned on an interchange, and (2) the vehicle is a set distance X (i.e. 200 yards) from the second path of travel 30. However, there can be one or more different conditions that the mirror change algorithm must meet before it determines the dynamic mirror angle adjustment a^{x}. In fact, the set distance X from the second path of travel 30 may be a variable distance selected by the user (i.e. 200 yards) or when the vehicle positioning data indicates that the vehicle is on an interchange.

In other embodiments, the mirror change algorithm may be triggered by other conditions. For instance, the mirror change algorithm may receive information from vehicle radar or other sensors that the vehicle has proceeded on an interchange or that a vehicle in an adjacent lane is in a blind spot or well outside the driver's peripheral vision. If so, then the mirror change algorithm determines the dynamic mirror angle adjustment a^{x} when the vehicle is positioned on a so called interchange (i.e. on ramp of a highway), as the first path of travel 20, at a set distance X from the second path of travel 30. The angles and position of the dynamic mirror angle adjustment a^{x} will be discussed in further below, with discussion of the system for dynamically adjusting a vehicle mirror.

If the mirror change algorithm is triggered and it determines that the dynamic mirror angle adjustment a^{x} is required from the standard mirror angle adjustment a¹, the vehicle mirror is physically adjusted 106 to the dynamic mirror angle adjustment a^{x} 106A from a standard mirror angle adjustment a¹.

Generally, the vehicle mirror 10 (often positioned on the side of vehicles) is equipped for manual or remote vertical and horizontal adjustment, such that the major surface of the vehicle mirror 10 allows viewing of an image of the surrounding area 50, including the side of the vehicle and the area outside of the driver's peripheral vision, when the operator is looking forward through the windshield. For remote adjustment, generally, the vehicle mirror 10 is adjusted by either a mechanical means using cables or an electrical means using geared motors. Either described means, or other known mechanisms that are known to adjust the angle of a mirror can be used to tilt the major surface of vehicle mirror 10 to view the sides of the vehicle as well outside of the driver's peripheral vision.

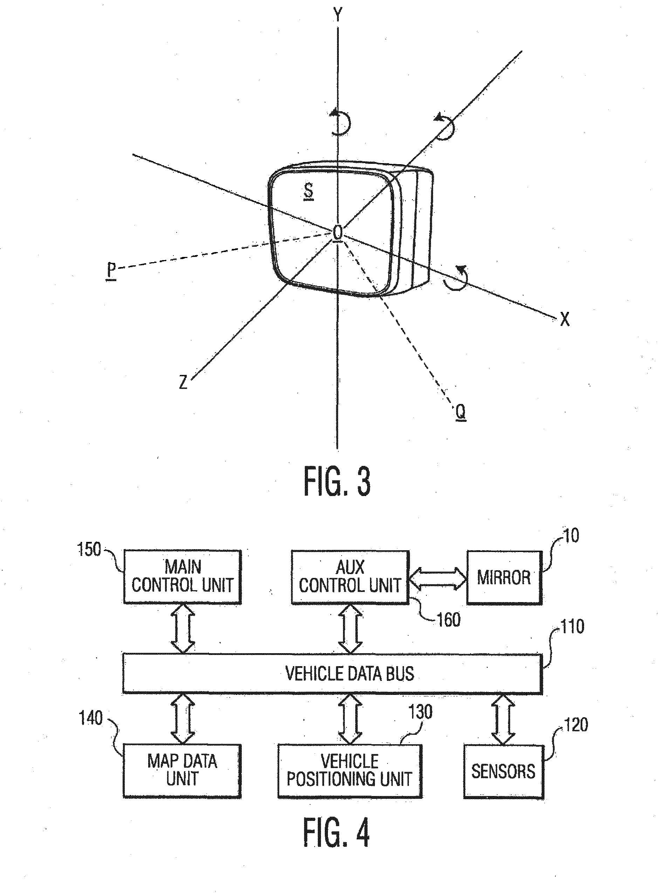

With reference to Figure 3, a major surface S of a vehicle mirror 10 is shown. The major surface S faces is directed to that what the driver of the vehicle wants to see, but is otherwise out of the driver's line of sight or peripheral vision. Also, the major surface S is angled according to the operator's position and posture. Therefore, if the driver wants to see areas on the side or rear of the vehicle, outside the peripheral vision, of the driver's sight, then the driver positions the major surface S so that the major surface S reflects the side or rear of the vehicle, outside the peripheral vision. This would be the standard mirror angle adjustment a¹. However, there are times when the standard mirror angle adjustment a¹ will not reflect an area that the driver is required to view, and the driver turns their head or body to view the area not shown by the standard mirror angle adjustment a¹. The dynamic mirror angle adjustment a^{x} would be the positioned of the major surface S (moveable along an x-y-z coordinate system) that reflects the area that the driver is therefore required to view.

For instance, when the vehicle is traveling along a first path of travel 20 and is merging onto the second path of travel 30, as shown in Figure 1, the vehicle mirror 10 positioned in the standard mirror angle adjustment a^{x} cannot reflect the second path of travel 30. However, the dynamic mirror angle adjustment a^{x} positions the major surface S by angles along an x-y-z coordinate system (see Figure 3), such that the second path of travel 30 is visible. The mirror change algorithm determines the exact angles required to provide an optimal viewing angle of the major surface for the second path of travel 30 until the vehicle is positioned on the second path of travel 30. As shown in Figure 3, a light ray PO of the second path of travel 30 (or objects located there on) strikes the major surface S of the vertical mirror at point O, and the reflected ray is OQ which is viewed by the driver. The optimal viewing angle of the second path of travel 30 requires that the reflected ray be directed within the driver's line of sight.

With reference to Figure 4, a dynamic mirror system 1 according to the invention is shown and performs the method of adjusting the vehicle mirror 10 to the dynamic mirror angle adjustment a^{x} positions. In one embodiment, the dynamic mirror system 1 includes the following components: the vehicle mirror 10, a system bus 110, sensors 120, a vehicle positioning unit 130, a map data unit 140, a main control unit 150, and a auxiliary control unit 160. However, it is possible that separate components be combined into construction of an integral component performing the functions of the separate components. For instance, the vehicle mirror 10 may include an auxiliary control unit 160. In another example, the map data unit 140 and the vehicle positioning unit 130 may be combined into a single integrated module that performs the functions of the separate components.

Now, a discussion and disclosure of each of component to the dynamic mirror system 1 will be provided, with reference to Figure 4.

The vehicle mirror 10 for purposes of this disclosure is a known wing mirror. However, other known mirrors offering different viewing angles to the driver of a vehicle could be used, including a known rear view mirror. The vehicle mirror 10 (also known as fender mirrors, door mirrors, or side mirrors) is a mirror found on the exterior of motor vehicle for the purposes of helping the driver see areas behind and to the sides of the vehicle, and/or outside of the driver's peripheral vision (in the known "blind spot"). The vehicle mirror 10 includes a major surface which reflects an image for the driver and the angle of which can be adjust manually or remotely by vertical and horizontal adjustments, such that the major surface of the vehicle mirror 10 reflects an image of the surrounding area 50. For remote adjustment, generally, the vehicle mirror 10 is adjusted by either a mechanical means using cables or an electrical means using geared motors. Either described means, or other known mechanisms that are known to adjust the angle of a mirror can be used to tilt the major surface of the vehicle mirror 10 to reflect the sides of the vehicle as well outside of the driver's peripheral vision.

The system bus 110 connects the components of dynamic mirror system 1 to each other. The system bus 110 functions of a system bus to carry information, an address bus to determine where it should be sent, and/or a control bus to determine its operation. More importantly, the system bus 110 allows the components of the system to communicate with each other.

The dynamic mirror system 1 includes numerous sensors and modules to collect map data. The collected map data includes information from many different sensors and modules, which then are variables for the mirror change algorithm to change the major surface S angle between the standard mirror angle adjustment a¹ and the dynamic mirror angle adjustment a^{x}.

The dynamic mirror system 1 may include a vehicle speed sensor (VSS), used to measure the speed of the vehicle. The speed of the vehicle provides the mirror change algorithm on how often to change the major surface S angle between the standard mirror angle adjustment a¹ and the dynamic mirror angle adjustment a^{x}. The speedometer could be used as well, in order to measure the instantaneous speed of the vehicle

Many cars include radar and/or proximity sensors to determine proximity of surround objects, such as adjacent vehicles. These sensors often emit an electromagnetic field or a beam of electromagnetic radiation (infrared, for instance), and looks for changes in the field or return signal. The information from these sensors can be input into the mirror change algorithm, which can determine an optimal angle for the major surface S, which may focus on the object detected by the proximity sensor and/or radar. Radar can be used to detect the speed of surrounding objects and their approach toward the vehicle.

A camera using recognition software can be used in the same way. In addition, the camera and recognition software can be used to objects and items that may not be detected by proximity sensors, such as traffic lines and signs.

A weather sensor can be used with the dynamic mirror system 1 to determine the weather (i.e. precipitation, wind, and temperature). All the data collected by the weather sensor can be inputted in to the mirror change algorithm. The information is then a variable in determining the optimal viewing angle of the major surface for the second path of travel 30.

An attitude indicator (AI), also known as gyro horizon or artificial horizon, or similar functioning module may be used to indicate the pitch (fore and aft tilt) and bank or roll (side to side tilt) the vehicle is positioned on and/or traveling. This information is another variable fed into the map data, which then determines the angle change of the major surface S of the vehicle mirror between the standard mirror angle adjustment a¹ and the dynamic mirror angle adjustment a^{x}.

Vehicle positioning data is acquired through the vehicle positioning unit 130. The vehicle positioning unit 130 determines the proximate position of the vehicle, which may be performed by connecting to one or more vehicle tracking systems. As a result, the vehicle positioning unit 130 can determine the approximate or precise location of the vehicle to which it is attached. That position is then recorded at regular intervals into the vehicle positioning unit 130 or into a memory of a vehicle-processing module, which is either connected to a processor or the vehicle positioning unit 130. In other embodiments, the position is then recorded at regular intervals into the map data unit 140.

In the an embodiment of the invention, the vehicle positioning unit 130 is a navigation system that generally maintains certain map data, such as geometry of the surrounding landscape and roadways, as well as other variables, including but not limited to traffic, visual obstructions, grade and elevation, and roadway restrictions (i.e. stop signs, traffic lights, speed limits, et al.). However it is possible, in other embodiments, the that vehicle positioning unit 130 does not maintain this information in memory, but can retrieve the same or similar information from a foreign database. In other embodiments, a different module or component of the dynamic mirror system 1 can retrieve this data.

In one embodiment, the vehicle positioning unit 130 utilizes a Global Position Systems (GPS) system. However, other known vehicle tracking systems may be used with the dynamic mirror system 1.

In one embodiment, the map data unit 140 is a module, a database, or databases that collect and maintain the variable information utilized by the mirror change algorithm to change the major surface S angle of the vehicle mirror between the standard mirror angle adjustment a¹ and the dynamic mirror angle adjustment a^{x}. As discussed above, the map data unit can be a standalone component of the dynamic mirror system 1 that communicates with other component by way of the system bus 110, or can integrated into another component of the dynamic mirror system 1. For instance, the map data unit 140 can be integrated into the vehicle positioning unit 130 or the main control unit 150.

The main control unit 150 includes central processing unit (CPU) for the dynamic mirror system 1 to perform the arithmetical, logical, and input/output operations of the mirror change algorithm. The main control unit 150 may also contain memory that holds the logic and instructions for the mirror change algorithm.

The auxiliary control unit 160 is a movement means for physically adjusting the major surface S angle of the vehicle mirror between the standard mirror angle adjustment a¹ and the dynamic mirror angle adjustment a^{x}. This can be performed by mechanical means or electrical means, as discussed above. The main control unit 150 communicates with the auxiliary control unit 160, by way of the system bus 110, to adjust the major surface S based on decisions performed by the mirror change algorithm. However, in other embodiments, the main control unit 150 can control and adjust the major surface S based on decisions performed by the mirror change algorithm.

The foregoing illustrates some of the possibilities for practicing the invention. Many other embodiments are possible within the scope and spirit of the invention. It is, therefore, intended that the foregoing description be regarded as illustrative rather than limiting, and that the scope of the invention is given by the appended claims together with their full range of equivalents.

## Claims

1. A method of adjusting a vehicle mirror (10), comprising:
receiving (100) map data of a surrounding area (50) of a vehicle including a first path (20) of travel and a second path (30) of travel;
receiving (102) vehicle positioning data indicating a vehicle position along one of the first path (20) of travel or the second path (30) of travel;
calculating (104) a dynamic mirror angle adjustment (a^{x}) based on the vehicle position and map data of the first path (20) of travel and the second path (30) of travel; and
adjusting (106) the vehicle mirror (10) by the dynamic mirror angle adjustment (a^{x}) relative to a standard mirror angle adjustment (a¹).

2. The method of adjusting the vehicle mirror (10) according to claim 1, wherein the standard mirror angle adjustment (a¹) is a static position and the dynamic mirror angle adjustment (a^{x}) is one or more dynamic adjustments of the vehicle mirror (10) relative to the static position.

3. The method of adjusting the vehicle mirror (10) according to claim 2, wherein the vehicle starts receiving and collecting the map data concerning the surrounding area (50) once the vehicle determines (100A) a proximate position of the vehicle.

4. The method of adjusting the vehicle mirror (10) according to claim 3, wherein the dynamic mirror angle adjustment (a^{x}) of the vehicle mirror (10) is a function of the proximate position of the vehicle relative to the map data.

5. The method of adjusting the vehicle mirror (10) according to claim 4, further comprising a vehicle positioning unit (130) that acquires vehicle positioning data and determines the proximate position of the vehicle using a vehicle tracking system.

6. The method of adjusting the vehicle mirror (10) according to any of the preceding claims, wherein the map data includes information regarding physical features and roadways within the surrounding area (50) including a geometry of existing roadways and terrain relief relative to the surrounding area (50) of the vehicle.

7. The method of adjusting the vehicle mirror (10) according to claim 6, wherein the map data includes speed limits, weather conditions, time of day, and road conditions.

8. The method of adjusting the vehicle mirror (10) according to any of the preceding claims, further comprising a main control unit determine when to adjust the standard mirror angle adjustment (a¹) to the dynamic mirror angle adjustment (a^{x}) and calculates the dynamic mirror angle adjustment (a^{x}) by processing the map data and acquired vehicle positioning data.

9. The method of adjusting the vehicle mirror (10) according to claim 8, further comprising a main control unit performing a mirror change algorithm that determines an adjustment angle of a major surface of the vehicle mirror (10).

10. The method of adjusting the vehicle mirror (10) according to any of the preceding claims, further comprising:
calculating an optimal vehicle mirror angle from the dynamic mirror angle adjustment (a^{x}) based on the vehicle position and geometry of the first path (20) of travel and the second path (30) of travel.

11. The method of adjusting the vehicle mirror (10) according to claim 10, wherein the vehicle mirror (10) is adjusted repeatedly based on real time repeated calculations of the optimal vehicle mirror angle.

12. A dynamic mirror system comprising:
a vehicle mirror (10);
a system bus (110) connected to the vehicle mirror (10);
a vehicle positioning unit (130) connected to the system bus (110) and collecting vehicle position data;
a map data unit (140) connected to the system bus (110) and collecting map data; and
a main control unit (150) connected to the system bus (110) and collecting map data and vehicle positioning data through the system bus (110), the main control unit (150) calculating an optimal vehicle mirror angle based on the vehicle position data and map data.

13. The dynamic mirror system according to claim 12, further comprising sensors (120) connected to the system bus (110) that collects map data.

14. The dynamic mirror system according to any of claims 12 or 13, wherein the map data unit (140) includes a database that collects and maintains variable information utilized by the main control unit (150) to change a major surface angle of the vehicle mirror (10) between a standard mirror angle adjustment (a¹) and a dynamic mirror angle adjustment (a^{x}).

15. The dynamic mirror system according to claim 14, further comprising an auxiliary control unit (160) that performs a movement means for physically adjusting the major surface angle of the vehicle mirror (10) between the standard mirror angle adjustment (a¹) and the dynamic mirror angle adjustment (a^{x}).
